# EUROPEAN PATENT APPLICATION

(11) **EP 1 956 848 A2**
(43) Date of publication of application: **13.08.2008**
(21) Application number: 07120721.1
(22) Date of filing: 14.11.2007
(51) Int. Cl.: H04N 7/50

(54) **Image information transmission system, image information transmitting apparatus, image information receiving apparatus, image information transmission method, image information transmitting method, and image information receiving method**

(30) Priority: 24.11.2006 JP 2006317212
(71) Applicant: Sony Corporation, Minato-ku Tokyo (JP)
(72) Inventor: Matsubayashi, Kei, Tokyo (JP)
(74) Representative: Thévenet, Jean-Bruno

(57) **Abstract**

An image information transmission system includes an image information transmitting apparatus (1), and an image information receiving apparatus. The image information transmitting apparatus (1) obtains primary-image transmission data, which is subjected to predetermined compression-coding (19, 20, 21) including bidirectionally predictive coding, for transmitting a moving image representing a primary image, and generates secondary-image transmission data for transmitting a secondary image to be displayed together with the primary image on a display screen. The primary-image transmission data and the secondary-image transmission data are transmitted to the image information receiving apparatus via a predetermined network communication link (26). Upon receipt of the primary-image transmission data and secondary-image transmission data, the image information receiving apparatus decodes the primary-image transmission data using a decoding scheme corresponding to the coding process, and decodes the secondary-image transmission data to generate a secondary-image video signal. The primary-image video signal and the secondary-image video signal are combined to display an image.

## Description

### BACKGROUND OF THE INVENTION

### 1. Field of the Invention

The present invention relates to image information transmission systems, image information transmitting apparatuses, image information receiving apparatuses, image information transmission methods, image information transmitting methods, and information receiving methods. More specifically, the present invention relates to an image information transmission system constructed for transmission of image information (image data) between an image information transmitting apparatus and an image information receiving apparatus, the image information transmitting apparatus and image information receiving apparatus constituting the image transmission system, and an image information transmission method, image information transmitting method, and image information receiving method adopted in the system and the apparatuses.

### 2. Description of the Related Art

There have been available audio visual (AV) systems constructed by connecting video signal output terminals of AV output apparatuses configured to output video and audio signals to external apparatuses such as a video cassette recorder to video and audio input/output terminals of image display apparatuses having an image display function, such as a television receiver, via cables. In such AV systems, video and audio signals of video content output from a video output apparatus are input to an image display apparatus to reproduce an image and sound.

In many AV output apparatuses, a video signal of a graphic image generated for a graphical user interface (GUI) (GUI image) can also be output from a video output terminal in a manner similar to that of a video signal of video content. The GUI image used for the video output apparatus can be displayed on an image display apparatus. A user viewing the displayed GUI images can operate a remote controller used with the video output apparatus, a handler mounted on the main body of the video output apparatus, or the like.

Recently, AV systems constructed by connecting video and audio apparatuses via networks rather than by connecting apparatuses via AV input/output terminals, have been used and proposed. Such AV systems are designed for video and audio applications in home networks, and are also called AV home networks.

For example, a video output apparatus and an image display apparatus, which are apparatuses constituting the AV systems described above, are connected via a network to establish an AV home network. One of the most common types of a user interface for inputting an operation to the video output apparatus is that, similarly to the AV systems described above, a GUI image generated by the video output apparatus is displayed on the image display apparatus and a user operates on the GUI image to control the video apparatus.

In this case, a video signal of the GUI image is transmitted from the video output apparatus to the image display apparatus via network communication, and the image display apparatus displays the received video signal (see, for example, Japanese Unexamined Patent Application Publication No. 2006-129103).

### SUMMARY OF THE INVENTION

For example, a video signal of a GUI image is transmitted from a first apparatus to a second apparatus, the first and second apparatuses being connected via a network, and the video signal is displayed on the second apparatus. In such a situation, it is desirable to achieve a smooth GUI operation with the avoidance of any delay in transition or change in an image contained in the GUI image in response to an operation, which can be caused depending on the protocol by which the video signal of the GUI image is transmitted via the network.

According to an embodiment of the present invention, there is provided an image information transmission system including an image information transmitting apparatus and an image information receiving apparatus.

The image information transmitting apparatus includes the following elements. Image data obtaining means obtains, as transmission data for transmitting a primary-image video signal that is a video signal of a moving image having content representing a primary image, primary-image transmission data subjected to a predetermined compression-coding process including a bidirectionally predictive coding process. Image data generating means generates secondary-image transmission data, the secondary-image transmission data being transmission data for transmitting a secondary image to be displayed on the same screen as a screen on which the primary image is displayed and being formed of compressed still-image data and continuity instruction information, the compressed still-image data having image content representing a graphical-user-interface image used as a graphical user interface and being compression-coded still-image data corresponding to one frame of the graphical-user-interface image, the continuity instruction information being significant information indicating a period in which the same image content as the image content of the compressed still-image data continues. Transmitting means transmits the primary-image transmission data and the secondary-image transmission data to the image information receiving apparatus via a predetermined network communication link.

The image information receiving apparatus includes the following elements. Receiving means receives the primary-image transmission data and secondary-image transmission data transmitted via the network communication link. First decoding means performs a decoding process corresponding to the compression-coding process on the primary-image transmission data received by the receiving means to obtain the primary-image video signal. Second decoding means performs a decoding process using the compressed still-image data and continuity instruction information forming the secondary-image transmission data received by the receiving means to generate a secondary-image video signal that is a video signal of the secondary image. Video signal outputting means combines the primary-image video signal obtained by the first decoding means and the secondary-image video signal obtained by the second decoding means to obtain a combined video signal, and outputs the combined video signal in a form that can be used to display an image.

According to another embodiment of the present invention, there is provided an image information transmitting apparatus including the following elements. Image data obtaining means obtains, as transmission data for transmitting a primary-image video signal that is a video signal of a moving image having content representing a primary image, primary-image transmission data subjected to a predetermined compression-coding process including a bidirectionally predictive coding process. Image data generating means generates secondary-image transmission data, the secondary-image transmission data being transmission data for transmitting a secondary image to be displayed on the same screen as a screen on which the primary image is displayed and being formed of compressed still-image data and continuity instruction information, the compressed still-image data having image content representing a graphical-user-interface image used as a graphical user interface and being compression-coded still-image data corresponding to one frame of the graphical-user-interface image, the continuity instruction information being significant information indicating a period in which the same image content as the image content of the compressed still-image data continues. Transmitting means transmits the primary-image transmission data and the secondary-image transmission data via a predetermined network communication link to an image information receiving apparatus connected to the network communication link, the image information receiving apparatus being configured to receive and decode the primary-image transmission data and the secondary-image transmission data, to combine the decoded primary-image transmission data and the decoded secondary-image transmission data to obtain combined image data, and to output the combined image data.

According to still another embodiment of the present invention, there is provided an image information receiving apparatus including the following elements. Receiving means receives primary-image transmission data and secondary-image transmission data generated and transmitted by an image information transmitting apparatus via a predetermined network communication link, the primary-image transmission data being transmission data for transmitting a primary-image video signal that is a video signal of a moving-image having content representing a primary image and being data subjected to a predetermined compression-coding process including a bidirectionally predictive coding process, the secondary-image transmission data being transmission data for transmitting a secondary image to be displayed on the same screen as a screen on which the primary image is displayed and being formed of compressed still-image data and continuity instruction information, the compressed still-image data having image content representing a graphical-user-interface image used for a graphical user interface and being compression-coded still-image data corresponding to one frame of the graphical-user-interface image, the continuity instruction information being significant information indicating a period in which the same image content as the image content of the compressed still-image data continues. First decoding means performs a decoding process corresponding to the compression-coding process on the primary-image transmission data received by the receiving means to obtain the primary-image video signal. Second decoding means performs a decoding process using the compressed still-image data and continuity instruction information forming the secondary-image transmission data received by the receiving means to generate a secondary-image video signal that is a video signal of the secondary image. Video signal outputting means combines the primary-image video signal obtained by the first decoding means and the secondary-image video signal obtained by the second decoding means to obtain a combined video signal, and outputs the combined video signal in a form that can be used to display an image.

According to the embodiments described above, first, the image information transmitting apparatus is configured to generate secondary-image transmission data representing a GUI image to be displayed on the same screen as a screen on which a primary image generated on the basis of primary-image transmission data corresponding to a primary image, which is a moving image, is displayed. The primary-image transmission data is data subjected to a compression coding process including a bidirectionally predictive coding process. The secondary-image transmission data is composed of compressed still-image data that is compression-coded still-image data corresponding to one frame of the GUI image, and information indicating a period in which the same image as an image designated by the compressed still-image data continues. The primary-image transmission data and the secondary-image transmission data are transmitted to the image information receiving apparatus via a network communication link.

The image information receiving apparatus is configured to receive the transmitted primary-image transmission data and secondary-image transmission data, to decode the primary-image transmission data and the secondary-image transmission data into video signals in a form that can be used for image display (a primary-image video signal and a secondary-image video signal), to combine the video signals, and to output the resulting combined video signal.

With this structure, the primary-image transmission data, which is data subjected to an image compression coding process including a bidirectionally predictive coding process, ensures that the moving image, which is the primary image, can be reproduced with high quality. The secondary image, which is the GUI image, on the other hand, is reproduced in the following manner. Compressed still-image data in the secondary-image transmission data is expanded to obtain a video signal of an image corresponding to one frame (a frame picture), and a video signal is configured so that the frame picture can continue within a period designated by continuity instruction information, thereby generating a secondary-image video signal. The decoding of the secondary-image transmission data into the secondary-image video signal can significantly reduce a delay time of video signal data input and output for decoding, compared with the decoding of a video signal that is compression-coded so as to include a bidirectionally-predictive-coded image.

Accordingly, the delay time at the input and output stages in the decoding process of video signal data for generating a secondary image is reduced, thereby reducing the time lag when switching the content of a GUI image actually displayed as the secondary image in response to an operation performed on the GUI image. Therefore, a user can more easily operate on the GUI image, and the ease of use can be improved.

### BRIEF DESCRIPTION OF THE DRAWINGS

Fig. 1 is a diagram showing an example structure of an AV home network according to an embodiment of the present invention;
Fig. 2 is a diagram schematically showing an example of a typical internal processing procedure for transmitting a GUI image via a network;
Fig. 3 is a diagram schematically showing an example of a processing timing of a combined video signal (a signal obtained by combining a source graphic signal and a source video signal) shown in Fig. 2 during a period from a moving-image compression coding process to a decoding process;
Fig. 4 is a diagram schematically showing an example of an internal processing procedure for transmitting video content and a GUI image from a video apparatus via a network according to the embodiment;
Fig. 5 is a diagram schematically showing an example of a processing timing when a television receiver decodes data of the GUI image coded by the procedure shown in Fig. 4;
Fig. 6 is a diagram showing an example structure of the video apparatus according to the embodiment; and
Fig. 7 is a diagram showing an example structure of the television receiver according to the embodiment.

### DESCRIPTION OF THE PREFERRED EMBODIMENTS

An embodiment of the present invention will be described hereinafter in the context of a system used as a home network for video and audio applications (an AV home network), by way of example. The system is constructed such that video content (and audio content) can be transmitted and received via a home network.

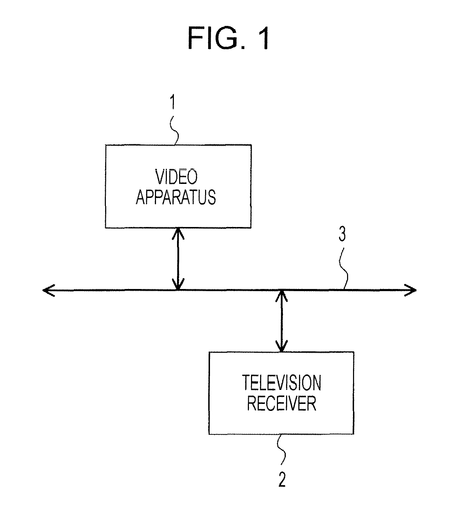

Fig. 1 shows an example structure of an AV home network according to the present embodiment. In the example shown in Fig. 1, a video apparatus 1 and a television receiver 2 are connected via a network line (network communication link) 3.

The video apparatus 1 includes, for example, a tuner capable of receiving a broadcast of a predetermined broadcast carrier (indicating different broadcast waves (broadcast signals) such as terrestrial waves, satellite broadcast waves (e.g., broadcasting satellite (BS) waves and communications satellite (CS) waves), and cable-television (CATV) broadcast waves, or a different carrier services or platforms on the same broadcast wave, or the like), and a drive compatible with a predetermined medium (storage medium), and has a program recording function. That is, the tuner receives and demodulates video content (broadcast content), and the demodulated content is written and stored in the medium using the drive. The video apparatus 1 may have, for example, a reservation recording function, etc., as well as the program recording function.

The video apparatus 1 also has a network communication function to reproduce data of video content stored in the medium in response to a video content request transmitted via, for example, a network and to transmit the data of video content to a requesting network terminal via the network communication link 3. Data of video content received and demodulated by the tuner of the video apparatus 1 can also be transmitted onto the network communication link 3 in a similar manner.

The television receiver 2 includes a tuner capable of receiving a broadcast of a predetermined broadcast carrier. The tuner receives and demodulates video content, and a video signal and an audio signal played back synchronously with the video signal are reproduced as an image and sound. Data of video content transmitted via the network line 3 can also be received and obtained, and can be reproduced in a similar manner as an image and sound.

Fig. 1 shows the video apparatus 1 and the television receiver 2 as apparatuses constituting an AV home network, which are the minimum requirements for the description of the present embodiment. In an actual AV home network, other network-compatible AV apparatuses may be connected in addition to the video apparatus 1 and the television receiver 2.

The video apparatus 1 according to the present embodiment can perform graphics processing to generate image data of a GUI image used for operating the video apparatus 1, and can output the image data as a video signal. The video apparatus 1 according to the present embodiment has a television tuner function supporting television broadcasting including data broadcasting. Therefore, the video apparatus 1 can perform graphics processing to reproduce content data obtained by receiving a data broadcast (data-broadcasting content data) to generate image data, and can also output the image data as a video signal.

A GUI image used for operating the video apparatus 1 is hereinafter referred to as a "self-generated GUI image", which derives from the generation of a source signal of the GUI image by the video apparatus 1 itself, and an image displayed on the basis of data transmitted via data broadcasting is hereinafter referred to as a "data-broadcasting GUI image". Since data-broadcasting content data is written in a markup language such as a broadcast markup language (BML), data-broadcasting content can be configured such that a predetermined change can be applied to an image contained in the content in response to an operation performed on the image. That is, a function as a GUI image is realized.

The self-generated GUI image and the data-broadcasting GUI image are hereinafter referred to simply as GUI images (secondary images) unless they are individually identified.

A video signal of the GUI image generated by the video apparatus 1 is subjected to a predetermined compression coding process before being transmitted to a network terminal, which is, for example, the same transmission destination as that of video content.

In the system configuration shown in Fig. 1, for example, the television receiver 2 functions as a client that requests the video apparatus 1 for video content. For example, when the display of the GUI image is desired, the video apparatus 1 transmits the video signal of the GUI image to the television receiver 2. The television receiver 2 decodes the transmitted video signal of the GUI image and displays an image.

For example, as a self-generated GUI image of the video apparatus 1, an image showing a list of video content items (video-content-list image) stored in the medium of the video apparatus 1 is displayed on the television receiver 2. In this situation, if a user operates to change the selection of a desired video content item from the list, for example, a highlighted area indicating the video content item being currently selected moves on the video-content-list image displayed on the television receiver 2 in accordance with the operation.

The movement of the highlighted area (changes in the GUI image) in response to an operation described above is realized by the video apparatus 1 by generating a new video-content-list image in which the highlighted area is changed to a desired position according to an operation instruction signal issued in response to an operation performed by the user and transmitting a video signal of the video-content-list image via the network communication link 3. The television receiver 2 receives and displays the video signal so that the highlighted area is visually perceived to move on the video-content-list image (GUI image) displayed on the television receiver 2 in accordance with a user's operation for changing the selection of a video content item.

When the user operates the video apparatus 1 to display a certain data broadcast, the video apparatus 1 reproduces data of data-broadcasting content received by and stored in the video apparatus 1 to generate a video signal of an image of the data broadcast (data-broadcasting GUI image), and transmits the video signal to the television receiver 2 via the network communication link 3. Then, the image of the data-broadcasting content is displayed on the television receiver 2. For example, the user operates on the data-broadcasting content, and the video apparatus 1 detects the user's operation. In this case, the video apparatus 1 switches from the generation of the video signal of the current data-broadcasting content to the generation of a video signal of an image of data-broadcasting content to be displayed in response to the detected operation, and transmits the generated video signal to the television receiver 2. On the television receiver 2, the image of the data-broadcasting content is switched and displayed in accordance with the user's operation.

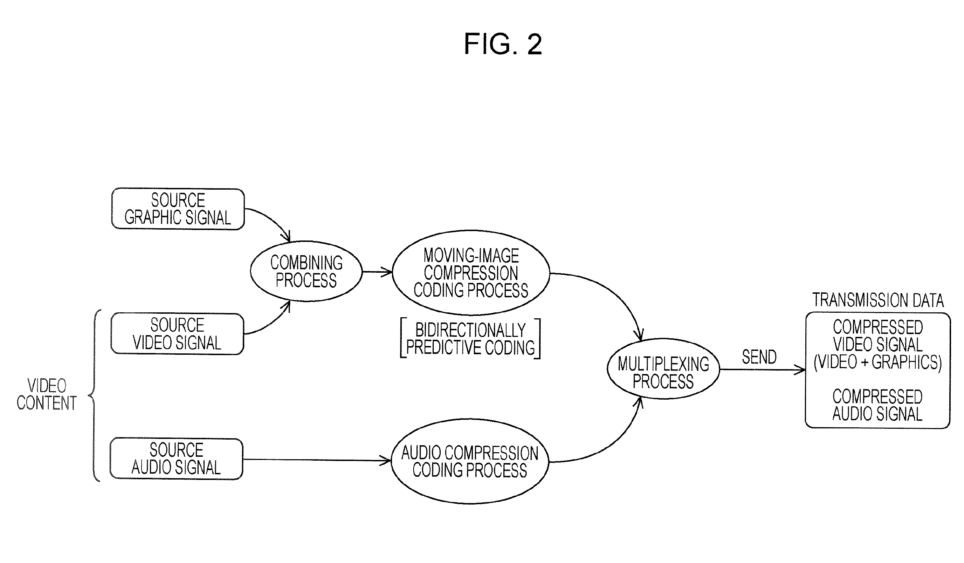

Fig. 2 shows an example of a typical internal processing procedure performed by the video apparatus 1 to transmit a GUI image via the network communication link 3.

In Fig. 2, source signals to be transmitted include a source graphic signal and a pair of source video and audio signals.

The source graphic signal is a video signal of data of a GUI image generated by the video apparatus 1, and is a baseband signal that is not coded for transmission.

The source video signal is an uncompressed baseband video signal forming video content reproduced by the video apparatus 1 from the medium, and the source audio signal is a baseband audio signal to be played back synchronously with the video signal.

In the processing, first, the source graphic signal and the source video signal, both of which are classified as a video signal type, are combined into a single baseband video signal, which is then subjected to an image compression coding process for coding a moving image (moving-image compression coding process).

The moving-image compression coding process uses a predetermined scheme based on predictive coding including bidirectionally predictive coding to achieve high-quality and high-efficiency compression coding of moving-image video signals. Current examples of the moving-image compression coding process include MPEG-2 (Motion Picture Experts Group phase 2), MPEG-4, H.264, and AVCHD (Advanced Video Codec High Definition), etc. In this embodiment, MPEG-2 is used by way of example. In MPEG-2, an intra-picture (I-picture), which is an intra-frame coded picture, a predictive-picture (P-picture), which is a forward-predictive coded picture, a bidirectionally predictive picture (B-picture), which is a bidirectionally predictive coded picture, are defined as coded pictures.

The source audio signal is subjected to an audio compression coding process. For example, the audio compression coding process uses a scheme, as defined under the application format, corresponding to the above-described moving-image compression coding scheme of the video signal.

Therefore, a compression-coded video signal (compressed video signal) based on the source graphic signal and the source video signal and a compression-coded audio signal (compressed audio signal) based on the source audio signal are obtained. The compressed video signal and the compressed audio signal are subjected to, for example, a time-division multiplexing process to generate transmission content data (transmission data) in which the video and audio signals are multiplexed. The transmission data is transmitted to the client network terminal (television receiver 2) according to a protocol supported by the network communication link 3.

For example, the television receiver 2, which is a client, receives and obtains the transmission data transmitted in the manner described above via the network communication link 3, and separates it into a compressed audio signal and a compressed video signal. The compressed audio signal is decoded using a decoding scheme corresponding to the moving-image compression coding scheme to obtain a baseband video signal, and an image is displayed on the basis of the video signal. On a display screen of the television receiver 2, therefore, for example, an image of video content reproduced by the video apparatus 1 or video content obtained by receiving a television broadcast using the tuner of the video apparatus 1 is displayed, and, as necessary, an image in which a GUI image is superimposed on the image of the video content is displayed.

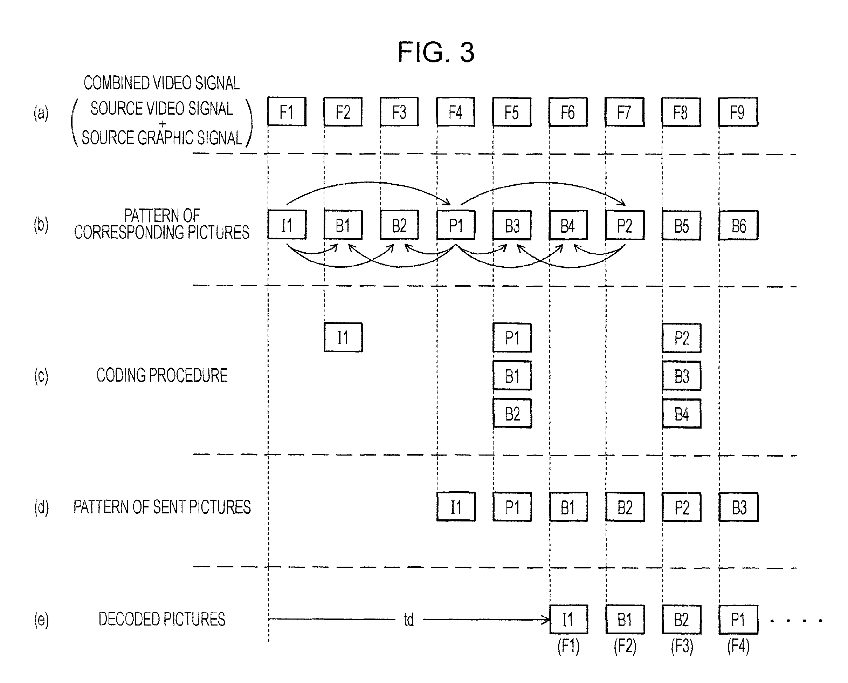

However, the internal processing procedure of the video apparatus 1 shown in Fig. 2 may have a problem in respect of ease of operation for the GUI image. This problem will be discussed with reference to Fig. 3.

Fig. 3 shows an example of a timing of the combined video signal shown in Fig. 2 (the signal obtained by combining the source graphic signal and the source video signal) from the moving-image compression coding process to the decoding process. It is to be noted that the moving-image compression coding process uses MPEG-2. The appearance cycle of an I-picture or a P-picture is three. That is, a picture pattern in which two B-pictures are inserted between an I-picture and a P-picture or between P-pictures is used.

First, part (a) of Fig. 3 shows a baseband combined video signal obtained by the video apparatus 1 by combining the source graphic signal and the source video signal. The combined video signal is schematically shown by a sequence of consecutive frame pictures F1 to F9. Part (b) of Fig. 3 shows coded pictures corresponding to data units of the frame pictures when the moving-image compression coding process is performed on the combined video signal. That is, the frame pictures F1, F2, F3, F4, F5, F6, F7, F8, and F9 correspond to an I-picture I1, a B-picture B1, a B-picture B2, a P-picture P1, a B-picture B3, a B-picture B4, a P-picture P2, a B-picture B5, and a B-picture B6, respectively.

Part (c) of Fig. 3 shows an example of a coding procedure in the moving-image compression coding process under the correspondence between the frame pictures shown in part (a) of Fig. 3 and the pictures shown in part (b) of Fig. 3.

First, the I-picture I1 is a picture obtained by coding only the frame picture F1. Thus, as shown in part (c) of Fig. 3, the I-picture I1 is obtained in a frame period subsequent to the period of the frame picture F1 (the period of the frame picture F2) as the earliest possible coding time.

Subsequently, in the moving-image compression coding procedure, coded pictures of the B-pictures B1 and B2 and P-picture P1 are generated by coding the frame pictures F2 to F4. Each of the B-pictures B1 and B2 is coded by referring to the preceding I-picture I1 and the following P-picture P1. Therefore, the P-picture P1 is coded after the I-picture I1. Since the P-picture P1 corresponds to the frame picture F4, the P-picture P1 is generated in the frame period of the frame picture F5, as the earliest possible coding time, which is a frame period subsequent to the frame picture F4. The P-picture P1 is generated by performing forward predictive coding using the I-picture 11. After the P-picture P1 is generated in the manner described above, the B-pictures B1 and B2 are generated by performing bidirectionally predictive coding using the P-picture P1 and the I-picture I1. Therefore, like the P-picture P1, the earliest time at which the B-pictures B1 and B2 are obtained is also the frame period of the frame picture F5.

Then, the B-pictures B3 and B4 and the P-picture P2 are coded. The P-picture P2 is generated by performing forward predictive coding using the P-picture P1, and the B-pictures B3 and B4 are generated by performing bidirectionally predictive coding using the P-pictures P1 and P2. Therefore, the images of the B-pictures B3 and B4 and the P-picture P2 are obtained in the frame period corresponding to the frame picture F8, which is three frames following the frame period in which the coded pictures of the B-pictures B1 and B2 and the P-picture P1 are obtained.

By performing the coding process according to the procedure described above, the coded pictures of the I-picture, the P-pictures, and the B-pictures are obtained at the times shown in part (c) of Fig. 3.

When the coded pictures are obtained at the times shown in part (c) of Fig. 3, the coded pictures (compressed video signal) are sent at the times shown in part (d) of Fig. 3.

For example, referring to part (c) of Fig. 3, although the I-picture 11 is obtained at the time of the frame picture F2, the P-picture P1 to be sent next is generated at the time of the frame picture F5, which is three frames following the I-picture I1. Therefore, the signal of the I-picture I1 is sent in the frame period corresponding to the frame picture F4, which is one frame preceding the frame picture F5, and the P-picture P1 is subsequently sent in the frame period corresponding to the frame picture F5. In the frame periods corresponding to the frame pictures F6 and F7, the B-pictures B1 and B2 are sequentially sent. In the subsequent frame period corresponding to the frame picture F8, the P-picture P2 is sent, and the B-pictures B3 and B4 are sequentially sent in the subsequent frame periods, wherein each of the B-pictures B3 and B4 is sent in each of the frame periods. Accordingly, the coded pictures are transmitted by changing the order of the coded pictures in the pattern of the pictures corresponding to frame pictures shown in parts (a) and (b) of Fig. 3 in accordance with the decoding process.

For ease of illustration, it is assumed that there is no time lag caused by transmission and reception of data via the network communication link 3. That is, in the example shown in Fig. 3, the television receiver 2 receives and inputs a compressed video signal as transmission data at the times shown in part (d) of Fig. 3.

If the television receiver 2 obtains the compressed video signal, i.e., the coded pictures, at the times shown in part (d) of Fig. 3, the coded pictures are decoded. Part (e) of Fig. 3 shows a recovery (demodulation) timing of the frame pictures shown in part (a) of Fig. 3 according to the arrangement pattern of the coded pictures shown in part (b) of Fig. 3.

As shown in part (e) of Fig. 3, after decoding, frame pictures are generated according to a correspondence pattern between frame pictures and coded pictures similar to that shown in parts (a) and (b) of Fig. 3. In this case, for example, the B-picture B1 can be recovered by referring to the preceding transmitted I-picture I1 and P-picture P1. Therefore, the decoding process of a frame picture using the B-picture B1 is completed in, for example, the frame period of the frame picture F7, which is one frame following the frame period of the frame picture F6 in which the B-picture B1 is received and obtained. Since the I-picture I1 is to be decoded corresponding to a frame immediately preceding the frame picture based on the B-picture B1, the frame picture obtained by decoding the I-picture I1 is output in the frame period of the frame picture F6, which is one frame immediately preceding the frame picture F7. The moving-image compression coding process and the decoding process are performed in this manner on the combined video signal (the signal obtained by combining the source video signal and the source graphic signal).

Referring again to Fig. 3, a time lag indicated as a delay time td occurs between the time at which the baseband frame picture F1 is generated and the time at which the decoding of the frame picture F1 is completed. As can be understood from the foregoing description, the delay time td inevitably occurs due to the coding process of the B-pictures and the decoding process of the B-pictures.

Such a delay is acceptable in the case where, for example, only a video signal of an image of video content reproduced from the medium by the video apparatus 1 or broadcast content received by the tuner or the like (i.e., the source video signal) is transmitted.

However, as with this case, if the source video signal and a source graphic signal as a GUI image are combined, the delay time td appears as a delayed response time to an operation performed on the GUI image.

As an example, it is assumed that the video apparatus 1 generates a graphic signal corresponding to a GUI image having new image content at the time of the frame picture F1 shown in Fig. 3 in response to a detection of an input operation signal. As can be understood from the foregoing description, the earliest time at which the frame picture F1 is decoded and displayed on the television receiver 2 is the time of the frame picture F6. Therefore, if the user operates on the GUI image at the time corresponding to the frame picture F1, a change in the GUI image induced by this operation occurs at the time corresponding to the frame picture F6, which is five frames following the frame picture F1. Thus, the user feels that the reaction of the change in the GUI image to the operation is slow, and is frustrated. Unfortunately, this gives a user-unfriendly impression to the user.

The present embodiment provides a structure, as described hereinafter, to overcome a delayed response to an operation performed on a GUI image, which can be caused by transmission of the GUI image via a network.

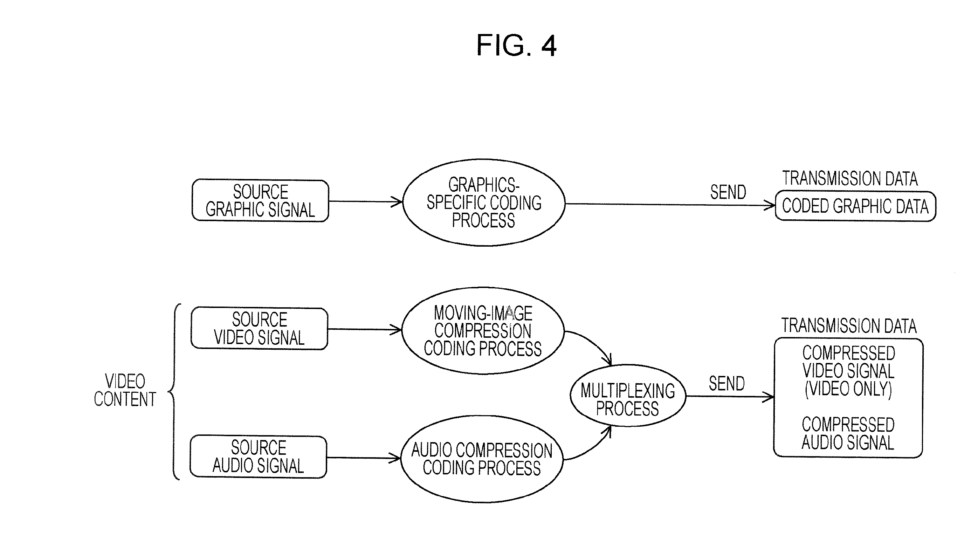

First, an example of an internal processing procedure performed by the video apparatus 1 to transmit video content and a GUI image via a network according to the present embodiment will be described with reference to Fig. 4.

As in the case shown in Fig. 2, the source signals to be transmitted include a baseband source graphic signal corresponding to the GUI image, and a pair of baseband source video signal and source audio signals corresponding to the video content. In the example shown in Fig. 2 described above, a moving-image compression coding process is performed on the combined video signal obtained by combining the source video signal and the source graphic signal. According to the present embodiment, on the other hand, a moving-image compression coding process is performed only on the source video signal. A compressed video signal obtained by the moving-image compression coding process and a compressed audio signal obtained by performing an audio compression coding process on the source audio signal are subjected to a multiplexing process based on time-division multiplexing. The resulting multiplexed data is composed of the video signal and audio signal forming the video content. Unlike the example shown in Fig. 2, no graphic signal of a GUI image and the like is contained. The resulting data is transmitted as transmission data to the television receiver 2 via the network communication link 3.

The source graphic signal is subjected to a coding process with an algorithm specific to graphic signals (graphics-specific coding process), and the resulting coded graphic data is transmitted as transmission data separate from the above content data to the television receiver 2 via the network communication link 3.

In the present embodiment, therefore, a graphic signal corresponding to a GUI image (secondary image) is not combined with a video signal corresponding to an image of video content, which is a primary image, and is subjected to a coding process different from the coding process of the video signal for transmission.

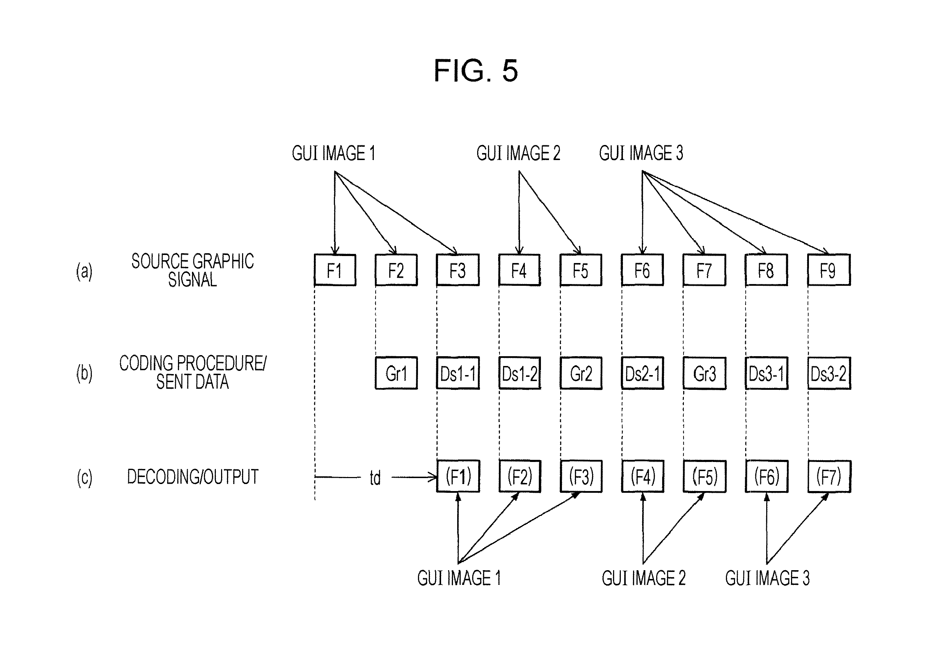

An example of the graphics-specific coding process and a decoding process for the coded graphic data will be described with reference to Fig. 5.

First, in part (a) of Fig. 5, a source graphic signal having image content representing a GUI image is shown by frame pictures. Nine consecutive frames are shown as frame pictures F1 to F9. In this case, the content of the GUI image is changed over time such that a GUI image 1 is displayed using three consecutive frames, the frame pictures F1 to F3, followed by a GUI image 2 different from the GUI image 1, which is displayed using two consecutive frames, the images F4 and F5, and then a GUI image 3 different from the GUI images 1 and 2 is displayed using four consecutive frames, the frame pictures F6 to F9.

In the frame picture structure of the source graphic signal shown in part
(a) of Fig. 5, according to the present embodiment, a graphics-specific coding process is performed in a manner shown in part (b) of Fig. 5. First, the frame picture F1 shown in part (a) of Fig. 5 is subjected to a predetermined compression coding process for coding a still image (still-image compression coding process) to generate a compressed still-image data unit Gr1 having image content of the GUI image 1 at the time of, for example, the frame picture F2 subsequent to the frame picture F1.

At the time of the frame picture F3 subsequent to the frame picture F2, it is determined whether or not there is a match between the image content of the frame picture F2 and that of the frame picture F1 preceding the frame picture F2. The frame pictures F1 and F2 have the image content of the GUI image 1, and have therefore the same image content. Therefore, it is determined that there is a match between the frame picture F2 and the frame picture F1. Based on this determination result, in the frame period subsequent to the compressed still-image data unit Gr1 (the period of the frame picture F3), an identical-image-content instruction information item Ds1-1 indicating that the image content of the current frame (corresponding to the frame picture F2) is identical to that of the compressed still-image data unit Gr1 is generated.

The above-described comparison as to whether two consecutive frame pictures are identical is performed every frame period. Therefore, at the subsequent time of the frame picture F4, the frame picture F2 and the frame picture F3 are compared, and as a result, it is determined that both frame pictures have the same image content. An identical-image-content instruction information item Ds1-2 indicating that the image content of the frame picture F3 is also identical to that of the compressed still-image data unit Gr1 is generated.

In the subsequent frame period (the time of the frame picture F5), it is determined whether or not there is a match between the frame picture F3 and the frame picture F4. Since the frame picture F3 forms the GUI image 1 and the frame picture F4 forms the GUI image 2, it is determined that no match is found therebetween. In this manner, in a frame period in which a change in a frame picture is detected, compressed still-image data representing the changed frame picture is generated. That is, the source graphic signal (frame picture data) representing the frame picture F4 is subjected to still-image compression coding to generate a compressed still-image data unit Gr2 having image content of the GUI image 2.

In the present embodiment, as described above, in a frame period in which a change occurs in image content of a frame picture of a source graphic signal, compressed still-image data having the image content of the changed frame picture is generated, and within a period during which the image content of the changed frame picture continues, identical-image-content instruction information Ds indicating the same image content as the immediately preceding frame is generated every frame period. With this coding procedure, in the example shown in Fig. 5, compressed still-image data or identical-image-content instruction information is generated in each frame period such that the compressed still-image data unit Gr1, the identical-image-content instruction information items Ds1-1, the identical-image-content instruction information item Ds1-2, the compressed still-image data unit Gr2, an identical-image-content instruction information item Ds2-1 (indicating the same image content as that of the compressed still-image data unit Gr2), a compressed still-image data unit Gr3, an identical-image-content instruction information item Ds3-1, an identical-image-content instruction information item Ds3-2, etc., are generated in the stated order.

The graphics-specific coding process according to the present embodiment is based on the procedure described above.

According to the graphics-specific coding process based on the above-described procedure, coded data is generated by combining a compressed still-image data unit associated with a given frame period in which a change in the content of a graphic signal occurs and an identical-image-content instruction information item indicating the same image content as that of the preceding frame in the graphic signal. Further, if one or more identical-image-content instruction information items indicating the same content as that of a compressed still-image data unit are regarded as a piece of information, the piece of information can be used as information (continuity instruction information) configured such that a period (time length) during which the same image content as that of the compressed still-image data unit continues is specified as consecutive frame periods.

The sequences of compressed still-image data as coded data and identical-image-content instruction information shown in part (a) of Fig. 5 also show the times at which of the coded data is transmitted from the video apparatus 1 to the television receiver 2 via a network. In this case, the coded data of the graphic signal according to the present embodiment is used to transmit compressed still-image data or identical-image-content instruction information substantially at each time interval corresponding to, for example, a frame period. Compressed still-image data of one frame corresponds to, for example, an I-picture in the moving-picture compression coding process, and identical-image-content instruction information merely indicates that the same image content as that of the preceding frame picture, resulting in a significantly smaller data size than a coded pictures or the like. That is, the bit rate of the coded data (transmission data) of the graphic signal according to the present embodiment is significantly low. Therefore, even if the coded data of the graphic signal is transmitted at the same time as data of the video content with high bit rate in the manner shown in Fig. 4, a sufficient amount of data transfer per unit time is ensured the data of the video content. Conversely, the amount of data transfer per unit time is also ensured for the coded data of the graphic signal.

Part (c) of Fig. 5 shows a decoding timing when the coded graphic data sent to the television receiver 2 at the times shown in part (b) of Fig. 5 is also received by the television receiver 2 at the times shown in part (b) of Fig. 5.

That is, in the decoding process, first, the compressed still-image data unit Gr1 obtained in part (b) of Fig. 5 is decoded to obtain a graphic signal as the frame picture F1 having the image content of the GUI image 1. In this example, the time at which the compressed still-image data unit Gr1 is decoded and a graphic signal as the frame picture F1 is obtained is the frame period in which the compressed still-image data unit Gr1 is obtained.

The television receiver 2 receives and obtains, as coded graphic data, the compressed still-image data unit Gr1 followed by the identical-image-content instruction information item Ds1-1. Due to the acquisition of the identical-image-content instruction information item Ds1-1, the television receiver 2 determines that the image content of the frame picture F2 subsequent to the frame picture F1 is the same as that of the frame picture F1. Thus, the television receiver 2 generates, as the frame picture F2, a graphic signal of the GUI image 1, which is the same as the frame picture F1. In the subsequent frame period, due to the acquisition of the identical-image-content instruction information item Ds1-2, the television receiver 2 determines that the image content of the frame picture F3 is also the same as that of the frame picture F2, and generates a graphic signal of the GUI image 1, which is the same as the frame pictures F1 and F2. Accordingly, frame picture data units (graphic signals) having the image content of the GUI image 1 are continuously generated as the frame pictures F1, F2, and F3.

In the subsequent frame period, the compressed still-image data unit Gr2 is received and obtained. The compressed still-image data unit Gr2 is decoded and output as the frame picture F4. Similarly to the procedure described above, in each frame period, in each frame period, frame picture data (graphic signal) having the same image content as that of the preceding frame is generated when identical-image-content instruction information Ds is obtained, and new compressed still-image data is decoded and output as frame picture data. As a result of such a decoding process, as shown in part (c) of Fig. 5, a decoded baseband graphic signal is obtained such that the image content of the GUI image 1 is represented using the frame pictures F1 to F3, the image content of the GUI image 2 is represented using the frame pictures F4 and F5, and the image content of the GUI image 3 is represented using the frame picture F6 and the other frame pictures.

The television receiver 2 according to the present embodiment combines the baseband graphic signal obtained in the manner shown in part (c) of Fig. 5 with the baseband video signal of the video content decoded by a different decoding processing system. The resulting combined video signal is displayed as an image.

A delay time td caused by the coding and decoding processes of the graphic signal shown in Fig. 5, i.e., a time difference between the time at which a given frame picture as a source graphic signal is generated and the time at which the given frame picture is decoded and output, is a period corresponding to two frames. The delay time td shown in Fig. 5 is significantly shorter than delay time td shown in Fig. 3.

Due to the reduction in the delay time td, GUI images are quickly changed or switched in response to an operation of the video apparatus 1. Therefore, for example, the frustration of the user in operating on a GUI image is eliminated or reduced, resulting in improved ease of use.

In the procedure shown in Fig. 4, video content and a GUI image are coded by different systems and are then sent. Therefore, a graphic signal of the GUI image is not adapted to be played back synchronously with a video signal of the video content. In data broadcasting, the content of a broadcast may be changed in accordance with the progress of a main broadcast program corresponding to the video content. Therefore, if a data-broadcasting GUI image is sent by the procedure shown in Fig. 4, a shift in display timing of the data-broadcasting GUI image on the image displayed on the television receiver 2 may occur with respect to the progress of images in the video content as the main program.

In the current situation, however, in most cases, data-broadcasting content may not be changed in accordance with a change in images in the main program image. Therefore, in actual use, even if a shift occurs in display timing of the data-broadcasting GUI image with respect to the main program image in the manner described above, this may not frustrate the user and no problem arises. For example, if a source video signal of video content is combined with a source graphic signal according to the procedure described with reference to Fig. 2, display switching of data-broadcasting GUI images is synchronized with the progress of the displayed main program image. However, if display switching is to be performed in response to an operation performed on a data-broadcasting GUI image, as described with reference to Fig. 3, the response to the operation is slow. In actual use, the user is more sensitive to such a delay of change in an image in response to an operation, which is first overcome in the present embodiment.

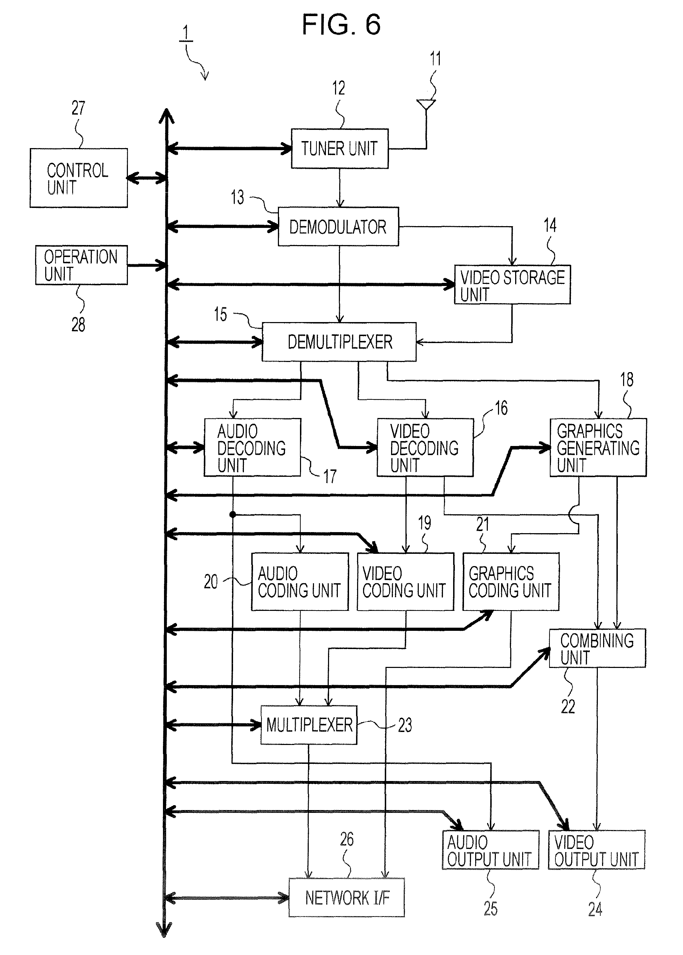

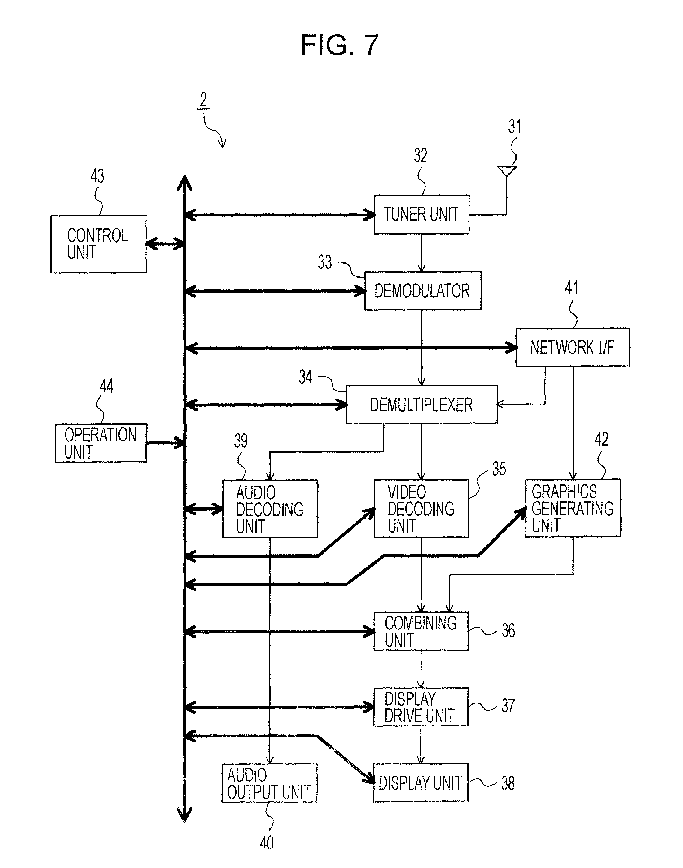

Next, an example structure of the video apparatus 1 and television receiver 2 for realizing the coding transmission and decoding process of a graphic image according to the present embodiment described with reference to Figs. 4 and 5 will be described with reference to Figs. 6 and 7. Fig. 6 shows an example structure of the video apparatus 1, and Fig. 7 shows an example structure of the television receiver 2.

First, the structure of the video apparatus 1 shown in Fig. 6 will be described.

The video apparatus 1 has a television tuner function for receiving a broadcast wave of a predetermined broadcast carrier and selecting a television channel. The television tuner function is implemented by a tuner unit 12 or the like. A signal (received signal) obtained by receiving a broadcast wave of a predetermined broadcast carrier via an antenna 11 is input to the tuner unit 12. For example, the tuner unit 12 performs a channel selection process according to channel-selection control (channel designation) of a control unit 27 to obtain a received signal component corresponding to a specified broadcast station (channel) from the received signal. The control unit 27 performs the control by, for example, selecting a channel specified in response to a channel selection operation performed using an operation unit 28.

The received signal component of the specified channel obtained by the tuner unit 12 is input to a demodulator 13. The demodulator 13 demodulates the input signal using a demodulation scheme corresponding to the modulation scheme used at the time of transmission to obtain a demodulated received signal. The demodulated received signal forms video content obtained by receiving a broadcast, including a video signal and an audio signal that are compression-coded using predetermined schemes, and is data in which the video signal and the audio signal are multiplexed. When the broadcast video content is broadcast with a data broadcast, a signal of the data broadcast (data-broadcasting content data) is also multiplexed in the demodulated received signal.

The demodulated received signal is first transferred to a video storage unit 14 as recording data of a broadcast.

The video storage unit 14 is capable of recording and reproducing data in and from a storage medium with a relatively large capacity, such as a hard disk drive (HDD) or digital versatile disk (DVD) in the current situation, or an optical disk medium in the next generation of DVDs. The video storage unit 14 writes the transferred recording data (demodulated received signal) in a storage medium according to the control of the control unit 27, and stores the recording data in a predetermined form in which, for example, the recording data is managed in units of content files. In the video apparatus 1 of the present embodiment, therefore, data of video content obtained by receiving a television broadcast is managed in the file format for storage.

The video storage unit 14 also reads data of a content file stored in the storage medium in the manner described above according to the control of the control unit 27 in response to a reproduction instruction operation performed on the content file using the operation unit 28 or the like, and outputs the read data as reproduced data. The reproduced data is input to a demultiplexer 15.

The demultiplexer 15 receives the demodulated received signal output from the demodulator 13, i.e., data of video content obtained in real time by receiving a television broadcast, or the data of the video content (content file) read by the video storage unit 14 in the manner described above. As can be understood from the foregoing description, a video signal (in the compression-coded form) and audio signal (in the compression-coded form) forming the video content are multiplexed in the data of the received video content regardless of which video content is received, and data-broadcasting content data may also be multiplexed.

Therefore, the demultiplexer 15 demultiplexes the received video content data to separately extract a video signal and an audio signal, as well as data-broadcasting content data if data-broadcasting content data is also multiplexed, from the video content. The extracted video signal, audio signal, and data-broadcasting content data are output to a video decoding unit 16, an audio decoding unit 17, and a graphics generating unit 18, respectively.

The video decoding unit 16 performs a decoding (expansion) process corresponding to the compression coding process applied to the input video signal to obtain an uncompressed baseband video signal.

The audio decoding unit 17 also performs the decoding (expansion) process corresponding to the compression coding process applied to the input audio signal to obtain an uncompressed baseband audio signal.

The graphics generating unit 18 is configured to generate a baseband video signal having image content obtained by reproducing the input data-broadcasting content data. That is, the graphics generating unit 18 is configured to generate a video signal of a data-broadcasting GUI image.

As described previously, the data-broadcasting content data is in a content form written in a markup language such as BML. Accordingly, the graphics generating unit 18 implements a function as a BML browser, and interprets the description of a BML file input as the data-broadcasting content data to reproduce the data-broadcasting content data. As a result of the reproduction, for example, image data (frame picture data) of the data-broadcasting content data is obtained, and a video signal is generated on the basis of the image data.

The graphics generating unit 18 is also configured to generate a video signal of a self-generated GUI image. That is, the graphics generating unit 18 is configured to generate image data (frame picture data) having image content of a desired self-generated GUI image according to the control of the control unit 27. A video signal is generated on the basis of the generated frame picture data.

As described above, the video apparatus 1 according to the present embodiment is configured such that video and audio signals can be output to an external apparatus via the network communication link 3 or according to a predetermined video and audio signal input/output standard.

When video and audio signals are output according to a predetermined video and audio signal input/output standard, the baseband video signal (primary-image video signal) generated by the video decoding unit 16 is output to a combining unit 22. If the graphics generating unit 18 also generates a video signal (GUI-image video signal), the video signal is also output to the combining unit 22.

When the GUI-image video signal from the graphics generating unit 18 is input together with the primary-image video signal from the video decoding unit 16, the combining unit 22 combines the GUI-image video signal with the primary-image video signal, and outputs the resulting combined video signal to a video output unit 24.

The baseband audio signal obtained by the audio decoding unit 17 is output to an audio output unit 25.

The video output unit 24 and the audio output unit 25 are paired with each other in accordance with the predetermined video and audio signal input/output standard, and are provided with output terminals compatible with the video and audio signal input/output standard to which the input video signal and audio signal are output. For example, the output terminal of the video output unit 24 and the output terminal of the audio output unit 25 are connected to an input terminal of an external display monitor compatible with the video and audio signal input/output standard. Therefore, an image of the video signal output from the video output unit 24 is displayed on a screen of the external display monitor, and sound of the audio signal output from the audio output unit 25 is output via a speaker or the like connected to the external display monitor so as to be played back synchronously with the output image.

When video and audio signals are output via the network communication link 3 according to the present embodiment, the baseband video signal and audio signal obtained by the video decoding unit 16 and the audio decoding unit 17, and the video signal (graphic signal) of the GUI image obtained by the graphics generating unit 18 are handled as a source video signal, a source audio signal, and a source graphic signal, respectively, and are processed according to the procedure shown in Fig. 4.

In the video apparatus 1 according to the present embodiment, the video signal obtained by the video decoding unit 16 is input to a video coding unit 19, and the audio signal obtained by the audio decoding unit 17 is input to an audio coding unit 20. The video signal obtained by the graphics generating unit 18 is input to a graphics coding unit 21.

The video coding unit 19 performs a predetermined compression coding process on the input video signal. The compression coding process corresponds to the moving-image compression coding process performed on the source video signal shown in Fig. 4.

The audio coding unit 20 performs a coding process, corresponding to the audio compression coding process performed on the source audio signal shown in Fig. 4, on the input audio signal.

A multiplexer 23 multiplexes the compression-coded video signal generated by the video coding unit 19 and the compression-coded audio signal generated by the audio coding unit 20, and outputs video content data in which the video signal and the audio signal are multiplexed to a network interface 26.

The graphics coding unit 21 performs the coding process described with reference to parts (a) and (b) of Fig. 5 on the input graphic signal (baseband video signal forming a GUI image) to obtain coded graphic data. As described above with reference to Fig. 5, the coded graphic data is composed of frame picture data, corresponding to a frame time at which the content of a GUI image is changed, having the content of the changed GUI image, and identical-image-content instruction information corresponding to each frame in which the content of the GUI image does not change.

The generated coded graphic data is output as transmission data separate from the video content data to the network interface 26 without being multiplexed with the compressed video signal and audio signal forming the video content data.

The network interface 26 is implemented by hardware or software in accordance with a communication protocol via the network communication link 3, and is configured to perform communication via the network communication link 3 according to the control of, for example, the control unit 27 (application).

When the video content data and the coded graphic data (GUI image data) are input to the network interface 26 in the manner described above, the network interface 26 performs a predetermined arbitration process or the like on the input data so that, for example, a desired amount of data transfer per unit time can be ensured for the input data, and sends the result to a transmission destination client (the television receiver 2) via the network communication link 3 by packet transmission.

In an actual hardware implementation, for example, the control unit 27 is composed of a microcomputer including a central processing unit (CPU), a random access memory (RAM), a read-only memory (ROM), etc., and controls the overall operation of the video apparatus 1.

The operation unit 28 integrally includes, for example, various types of handlers mounted on the main body of the video apparatus 1, and an operation signal output unit that generates an operation signal corresponding to an operation performed on each of the handlers and that outputs the operation signals to the control unit 27 (CPU). If the operation of the video apparatus 1 is controlled using a remote controller, the operation unit 28 further includes the remote controller, and a receiver that receives, at the main body, an operation code signal transmitted from the remote controller and that outputs it as an operation signal to the control unit 27.

Next, the structure of the television receiver 2 shown in Fig. 7 will be described.

Also in the television receiver 2, a received signal obtained by receiving a broadcast wave of a predetermined broadcast carrier via an antenna 31 is input to a tuner unit 32. For example, the tuner unit 32 performs a channel selection process according to channel-selection control (channel designation) of a control unit 43 to obtain a received signal component corresponding to a specified broadcast station (channel) from the received signal, and outputs the received signal component to a demodulator 33.

The demodulator 33 demodulates the input signal using a demodulation scheme corresponding to the modulation scheme used at the time of transmission to obtain a demodulated received signal.

The demodulated received signal is in the form in which, for example, a compression-coded video signal and audio signal are multiplexed. A demultiplexer 34 separately extracts the compression-coded video signal and the compression-coded audio signal from the demodulated received signal, and outputs the separated video signal and the separated audio signal to a video decoding unit 35 and an audio decoding unit 39, respectively.

The demultiplexer 34 is also configured to receive data of video content received from a network interface 41 via the network communication link 3 and to separate it into a video signal and an audio signal. This operation is described below.

The video decoding unit 35 performs a decoding (expansion) process on the input video signal to generate an uncompressed baseband video signal. The baseband video signal is output to a combining unit 36.

When a baseband video signal (graphic signal) as a GUI image is input to the combining unit 36 from a graphic decoding unit 42 in the manner described below, the combining unit 36 combines the graphic signal with the video signal corresponding to the primary image input from the video decoding unit 35, and then outputs the resulting video signal to a display drive unit 37.

The display drive unit 37 controls the display driving of a display unit 38 using the video signal input from the combining unit 36. An image of the video signal input to the display drive unit 37 is displayed on a screen of the display unit 38.

The audio signal separately extracted by the demultiplexer 34 is output to the audio decoding unit 39, and is decoded (expanded) into a baseband audio signal. The baseband audio signal is output to an audio output unit 40.

The audio output unit 40 is configured to perform, for example, sound quality adjustment and other signal processing on the input audio signal before amplifying it, and to drive a speaker or the like using the amplified signal to output a sound.

As can be understood from the foregoing description, the television receiver 2 is configured to, first, receive a television broadcast and select a television channel and to output the resulting video signal and audio signal as an image and sound that can be viewed and listened to by a user.

The control unit 43 is composed of, for example, a microcomputer including a CPU, a RAM, a ROM, etc., and controls the overall operation of the television receiver 2.

An operation unit 44 integrally includes, for example, various types of handlers mounted on the main body of the television receiver 2, and an operation signal output unit that generates an operation signal corresponding to an operation performed on each of the handlers and that outputs the operation signals to the control unit 43 (CPU). If the operation of the television receiver 2 is controlled using a remote controller, the operation unit 44 further includes the remote controller, and a receiver that receives, at the main body, an operation code signal transmitted from the remote controller and that outputs it as an operation signal to the control unit 43.

The structure of the television receiver 2 shown in Fig. 7 in which the video content data and coded graphic data (GUI image data) transmitted from the video apparatus 1 according to the present embodiment shown in Fig. 6 via the network communication link 3 are received and obtained by the television receiver 2 and are output as an image and sound will be discussed hereinafter.

The television receiver 2 is provided with the network interface 41 to allow communication via the network communication link 3 according to the control of, for example, the control unit 43 (application). When the network interface 41 receives packets containing video content data transmitted from the video apparatus 1, the video content data is extracted from the received packets, and is recovered by concatenation. The resulting data is output to the demultiplexer 34. Upon receipt of the data, the demultiplexer 34 separately extracts a video signal and an audio signal from the input video content data in the manner described above, and outputs the extracted video signal and audio signal to the video decoding unit 35 and the audio decoding unit 39, respectively. The subsequent processing and the signal and data flow associated therewith are similar to those described above.

When coded graphic data is transmitted from the video apparatus 1, the network interface 41 receives packets containing the coded graphic data as well as the video content data. The network interface 41 extracts a substantial part of the coded graphic data from the packets of the coded graphic data for recovery, and outputs the result to the graphic decoding unit 42.

The graphic decoding unit 42 decodes the input coded graphic data in the manner described above with reference to Fig. 5 to generate a baseband video signal (graphic signal) indicating a GUI image. The generated graphic signal is output to the combining unit 36.

The combining unit 36 combines the graphic signal with the primary-image video signal input from the video decoding unit 35, and outputs the resulting combined signal to the display drive unit 37.

As a result of the above-described process performed on the video content data and coded graphic data received and obtained by the network interface 41 of the television receiver 2, an image in which the GUI image (self-generated GUI image or data-broadcasting GUI image) generated by the video apparatus 1 is superimposed on the image (primary image) of the video content sent from the video apparatus 1 is displayed on the display unit 38. It is noted that when the user operates on the GUI image displayed in the manner described above, a quickly change in the image content occurs in response to the operation.

There are roughly two techniques for allowing the video apparatus 1 connected to the television receiver 2 via a network to detect an operation performed on a GUI image sent from the video apparatus 1 and displayed on the television receiver 2 according to the present embodiment.

In a first technique, the user operates on the GUI image using an operation unit associated with the video apparatus 1. For example, the user operates on the GUI image displayed on the television receiver 2 using a remote controller supplied with the video apparatus 1. In actual use, an operation instruction signal is wirelessly transmitted from the remote controller in response to an operation performed on the remote controller, and is received by the video apparatus 1. Upon receipt of the operation instruction signal, the video apparatus 1 detects the operation performed on the GUI image.

In a second technique, a program complying with a protocol capable of controlling the video apparatus 1 via a network (a video control program) is loaded into the television receiver 2. Then, the user operates on the GUI image using an operation unit associated with the television receiver 2. In this case, for example, the user operates a predetermined handler mounted on a remote controller supplied with the television receiver 2 to operate on the GUI image displayed on the television receiver 2. When an operation instruction signal is wirelessly transmitted from the remote controller in response to the operation and is received by the television receiver 2, the television receiver 2 converts the received operation instruction signal into a predetermined command according to the video control program, and transmits the command to the video apparatus 1 via the network communication link 3. Upon receipt of the command, the video apparatus 1 detects the operation performed on the GUI image.

Main elements of the video apparatus 1 and the television receiver 2 shown in Figs. 6 and 7 are represented by functional blocks along the flow of signal processing, and in an actual hardware implementation, the video apparatus 1 and the television receiver 2 may not necessarily have the structures shown in Figs. 6 and 7. Functional blocks other than those shown in Figs. 6 and 7 may be used, and elements of the video apparatus 1 and the television receiver 2 are not limited to the illustrated elements.

As an example, in the structure of the video apparatus 1 (image information transmitting apparatus) shown in Fig. 6, video and audio information received and obtained by the tuner unit 12, and a content file read from the video storage unit 14 are decoded by the video decoding unit 16 and the audio decoding unit 17 using a decoding scheme corresponding to the compression coding scheme or the like before being compression-coded by the video coding unit 19 and the audio coding unit 20 for network transmission. However, for example, if the compression coding scheme used for the video and audio information received and obtained by the tuner unit 12 is compatible with the decoding scheme adopted in the television receiver 2, the video apparatus 1 may be configured such that the video and audio information received and obtained by the tuner unit 12 is sent via a network as it is without being internally decoded and then coded.

In the embodiment described above, a graphic signal to be coded and transmitted separately from video content data includes a self-generated GUI image generated by the video apparatus 1 itself, and a data-broadcasting GUI image based on data-broadcasting data received together with a television broadcast. According to an embodiment of the present invention, either GUI image may be coded and transmitted.

In the embodiment described above, compressed still-image data representing a frame picture in which a GUI image having new image content is started, and identical-image-content instruction information (continuity instruction information) indicating, for each frame period, the same content as the GUI image are generated as coded graphic data. That is, the identical-image-content instruction information indicates the same GUI image in units of frames. However, the unit is not limited to frames, and the identical-image-content instruction information may indicate the same GUI image on the basis of, for example, a predetermined unit time.

Further, in the image transmission system according to the embodiment described above, a video apparatus serves as an apparatus (image information transmitting apparatus) that sends a video signal of a primary image and a graphic signal of a GUI image, and a television receiver serves as an apparatus (image information receiving apparatus) that receives those signals. However, the combination of apparatuses is not limited to the video apparatus and the television receiver.

It should be understood by those skilled in the art that various modifications, combinations, sub-combinations and alterations may occur depending on design requirements and other factors insofar as they are within the of the appended claims or the equivalents thereof.

## Claims

1. An image information transmission system comprising:
an image information transmitting apparatus (1); and
an image information receiving apparatus (2),
the image information transmitting apparatus (1) including
image data obtaining means (16) for obtaining, as transmission data for transmitting a primary-image video signal that is a video signal of a moving image having content representing a primary image, primary-image transmission data subjected to a predetermined compression-coding process including a bidirectionally predictive coding process,
image data generating means (18) for generating secondary-image transmission data, the secondary-image transmission data being transmission data for transmitting a secondary image to be displayed on the same screen as a screen on which the primary image is displayed and being formed of compressed still-image data and continuity instruction information, the compressed still-image data having image content representing a graphical-user-interface image used as a graphical user interface and being compression-coded still-image data corresponding to one frame of the graphical-user-interface image, the continuity instruction information being significant information indicating a period in which the same image content as the image content of the compressed still-image data continues, and
transmitting means (26) for transmitting the primary-image transmission data and the secondary-image transmission data to the image information receiving apparatus (2) via a predetermined network communication link (3),
the image information receiving apparatus (2) including
receiving means (41) for receiving the primary-image transmission data and secondary-image transmission data transmitted via the network communication link (3),
first decoding means (35) for performing a decoding process corresponding to the compression-coding process on the primary-image transmission data received by the receiving means (2) to obtain the primary-image video signal,
second decoding means (42) for performing a decoding process using the compressed still-image data and continuity instruction information forming the secondary-image transmission data received by the receiving means (2) to generate a secondary-image video signal that is a video signal of the secondary image, and
video signal outputting means (36) for combining the primary-image video signal obtained by the first decoding means (35) and the secondary-image video signal obtained by the second decoding means (42) to obtain a combined video signal and outputting the combined video signal in a form that can be used to display an image.

2. An image information transmitting apparatus comprising:
image data obtaining means (16) for obtaining, as transmission data for transmitting a primary-image video signal that is a video signal of a moving image having content representing a primary image, primary-image transmission data subjected to a predetermined compression-coding process including a bidirectionally predictive coding process;
image data generating means (18) for generating secondary-image transmission data, the secondary-image transmission data being transmission data for transmitting a secondary image to be displayed on the same screen as a screen on which the primary image is displayed and being formed of compressed still-image data and continuity instruction information, the compressed still-image data having image content representing a graphical-user-interface image used as a graphical user interface and being compression-coded still-image data corresponding to one frame of the graphical-user-interface image, the continuity instruction information being significant information indicating a period in which the same image content as the image content of the compressed still-image data continues; and
transmitting means (26) for transmitting the primary-image transmission data and the secondary-image transmission data via a predetermined network communication link (3) to an image information receiving apparatus (2) connected to the network communication link (3), the image information receiving apparatus (2) being configured to receive and decode the primary-image transmission data and the secondary-image transmission data, to combine the decoded primary-image transmission data and the decoded secondary-image transmission data to obtain combined image data, and to output the combined image data.

3. An image information receiving apparatus comprising:
receiving means (41) for receiving primary-image transmission data and secondary-image transmission data generated and transmitted by an image information transmitting apparatus via a predetermined network communication link (3), the primary-image transmission data being transmission data for transmitting a primary-image video signal that is a video signal of a moving-image having content representing a primary image and being data subjected to a predetermined compression-coding process including a bidirectionally predictive coding process, the secondary-image transmission data being transmission data for transmitting a secondary image to be displayed on the same screen as a screen on which the primary image is displayed and being formed of compressed still-image data and continuity instruction information, the compressed still-image data having image content representing a graphical-user-interface image used for a graphical user interface and being compression-coded still-image data corresponding to one frame of the graphical-user-interface image, the continuity instruction information being significant information indicating a period in which the same image content as the image content of the compressed still-image data continues;
first decoding means (35) for performing a decoding process corresponding to the compression-coding process on the primary-image transmission data received by the receiving means (2) to obtain the primary-image video signal;
second decoding means (42) for performing a decoding process using the compressed still-image data and continuity instruction information forming the secondary-image transmission data received by the receiving means (2) to generate a secondary-image video signal that is a video signal of the secondary image; and
video signal outputting means (36) for combining the primary-image video signal obtained by the first decoding means (35) and the secondary-image video signal obtained by the second decoding means (42) to obtain a combined video signal and outputting the combined video signal in a form that can be used to display an image.

4. An image information transmission method in an image information transmission system including an image information transmitting apparatus (1) and an image information receiving apparatus (2), the method comprising the steps of:
obtaining, as transmission data for transmitting a primary-image video signal that is a video signal of a moving image having content representing a primary image, primary-image transmission data subjected to a predetermined compression-coding process including a bidirectionally predictive coding process,
in the image information transmitting apparatus (1), generating secondary-image transmission data, the secondary-image transmission data being transmission data for transmitting a secondary image to be displayed on the same screen as a screen on which the primary image is displayed and being formed of compressed still-image data and continuity instruction information, the compressed still-image data having image content representing a graphical-user-interface image used as a graphical user interface and being compression-coded still-image data corresponding to one frame of the graphical-user-interface image, the continuity instruction information being significant information indicating a period in which the same image content as the image content of the compressed still-image data continues;
in the image information transmitting apparatus (1), transmitting the primary-image transmission data and the secondary-image transmission data to the image information receiving apparatus (2) via a predetermined network communication link (3);
in the image information receiving apparatus (2), receiving the primary-image transmission data and secondary-image transmission data transmitted via the network communication link (3);
in the image information receiving apparatus (2), performing a decoding process corresponding to the compression-coding process on the received primary-image transmission data to obtain the primary-image video signal;
in the image information receiving apparatus (2), performing a decoding process using the compressed still-image data and continuity instruction information forming the received secondary-image transmission data to generate a secondary-image video signal that is a video signal of the secondary image; and
in the image information receiving apparatus (2), combining the obtained primary-image video signal and the generated secondary-image video signal to generate a combined video signal and outputting the combined video signal in a form that can be used to display an image.

5. An image information transmitting method comprising the steps of:
obtaining, as transmission data for transmitting a primary-image video signal that is a video signal of a moving image having content representing a primary image, primary-image transmission data subjected to a predetermined compression-coding process including a bidirectionally predictive coding process;
generating secondary-image transmission data, the secondary-image transmission data being transmission data for transmitting a secondary image to be displayed on the same screen as a screen on which the primary image is displayed and being formed of compressed still-image data and continuity instruction information, the compressed still-image data having image content representing a graphical-user-interface image used as a graphical user interface and being compression-coded still-image data corresponding to one frame of the graphical-user-interface image, the continuity instruction information being significant information indicating a period in which the same image content as the image content of the compressed still-image data continues; and
transmitting the primary-image transmission data and the secondary-image transmission data via a predetermined network communication link (3) to an image information receiving apparatus (2) connected to the network communication link (3), the image information receiving apparatus (2) being configured to receive and decode the primary-image transmission data and the secondary-image transmission data, to combine the decoded primary-image transmission data and the decoded secondary-image transmission data to obtain combined image data, and to output the combined image data.

6. An image information receiving method comprising the steps of:
receiving primary-image transmission data and secondary-image transmission data generated and transmitted by an image information transmitting apparatus (1) via a predetermined network communication link (3), the primary-image transmission data being transmission data for transmitting a primary-image video signal that is a video signal of a moving-image having content representing a primary image and being data subjected to a predetermined compression-coding process including a bidirectionally predictive coding process, the secondary-image transmission data being transmission data for transmitting a secondary image to be displayed on the same screen as a screen on which the primary image is displayed and being formed of compressed still-image data and continuity instruction information, the compressed still-image data having image content representing a graphical-user-interface image used for a graphical user interface and being compression-coded still-image data corresponding to one frame of the graphical-user-interface image, the continuity instruction information being significant information indicating a period in which the same image content as the image content of the compressed still-image data continues;
performing a decoding process corresponding to the compression-coding process on the received primary-image transmission data to obtain the primary-image video signal;
performing a decoding process using the compressed still-image data and continuity instruction information forming the received secondary-image transmission data to generate a secondary-image video signal that is a video signal of the secondary image; and
combining the obtained primary-image video signal and the generated secondary-image video signal to generate a combined video signal and outputting the combined video signal in a form that can be used to display an image.
